(19) Europäisches Patentamt
European Patent Office
Office européen des brevets

(11) **EP 3 225 977 B1**

(12) **EUROPEAN PATENT SPECIFICATION**

(45) Date of publication and mention
of the grant of the patent:
**13.03.2019   Bulletin 2019/11**

(51) Int Cl.:
***G01N 21/85*** *(2006.01)*

(21) Application number: **16163391.2**

(22) Date of filing: **31.03.2016**

(54) **METHOD AND SENSOR SYSTEM FOR DETECTING PARTICLES**

VERFAHREN UND SENSORSYSTEM ZUR ERKENNUNG VON TEILCHEN

PROCÉDÉ ET SYSTÈME DE CAPTEUR POUR LA DÉTECTION DE PARTICULES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2017   Bulletin 2017/40**

(73) Proprietor: **ams AG**
**8141 Premstätten (AT)**

(72) Inventor: **Enenkel, Jan**
**8101 Gratkorn (AT)**

(74) Representative: **Epping - Hermann - Fischer Patentanwaltsgesellschaft mbH Schloßschmidstraße 5 80639 München (DE)**

(56) References cited:
**US-A1- 2006 083 111     US-A1- 2015 241 330 US-A1- 2015 371 514**

**Description**

The invention relates to the field of detecting or sensing particles. More precisely, the invention relates to a method and a sensor system for detecting, in particular optically detecting, particles, in particular particles in a medium, for example air or a liquid such as water, present in a measurement chamber.

Existing approaches for detecting particles may use a system with an LED and a conventional photodiode within a measurement chamber filled with a medium such as air. For example, depending on the amount of particles in the medium, more or less light emitted by the LED is scattered by the particles and received by the photodiode.

A drawback of such approaches is that dirt, particles, contamination and/or dust may adhere on interior surfaces of the measurement chamber and on surfaces of optical elements like the LED or the photodiode, in particular molds, housings or covers thereof, or lenses. This accumulation of contamination may for example be even enhanced by air humidity.

Consequently, a signal representing the measured amount of particles in the medium may get tampered for example by light absorption due to the contamination on the optical elements and/or the measurement chamber, which may lead to a reduced measurement accuracy. As the described contamination may get worse during lifetime, the sensor system may lack longtime reliability.

US 2015/0371514 A1 shows a smoke and/or fire detector for the detection and distance measurement of smoke in a monitored zone, having a light transmitter for transmitting a transmitted light signal, having a light receiver for generating a received light signal from the transmitted light signal remitted or reflected in the monitored zone. An evaluation unit is provided for evaluating the time of flight of the received light signal, wherein the evaluation unit has a transient recorder and wherein the transient recorder is configured to record multiple received light signals of a single transmitted light signal successively following in time in a time period. The evaluation unit is configured to evaluate the received slight signals.

US 2015/0241330 A1 shows another particle detection system based on an active video smoke detection system. The system comprises an illumination means for directing a beam of radiation through an air volume being monitored. An image sensor is positioned to capture images of a beam. A timing circuitry is used to control both the light source and the receiver and measures the round-trip time for a light pulse emitted by the light source which is reflected by the object and returned to the sensor. A distance to the object is determined. In particular, the system determines the distance from the light source to the main system receiver and provides a means to indicate whether an object is present within the intervening space.

It is therefore an object to provide an improved concept for detecting particles, in particular particles in a medium, which results in an improved measurement accuracy and/or an improved longtime reliability.

This object is achieved by the subject matter of the independent claims. Further implementations and embodiments are the subject matter of the dependent claims.

Herein, particles may for example comprise dust particles, particulates, smoke particles, biological particles or other types of particles. The particle sizes may for example lie in the range of nanometers, micrometers and/or millimeters. Typical particle sizes may include 100nm, $1\mu m$, $2.5\mu m$ or $10\mu m$.

Herein, the expression "air" generally denotes a gas or a gaseous mixture, for example present in an environment of a sensor system according to the improved concept. In particular, "air" may denote a gaseous mixture as present in the atmosphere of the earth. However, the expression "air" should not be understood in a limiting sense regarding a particular composition of the gas or gaseous mixture. In particular, the implementations according to the improved concept do not rely on such a particular composition.

Herein, the expression "light" generally denotes electromagnetic radiation with a wavelength within a visible, infrared and/or ultraviolet spectrum of radiation.

According to the improved concept, a first pulse of light is emitted into a measurement chamber by an emitter unit and first fractions of the first pulse being reflected by particles in a medium present in the measurement chamber are detected by a photosensitive element during a first time window. Therein, the first time window is specifically adjusted to a timing of the first pulse and to a mutual arrangement of the measurement chamber, the emitter unit and the photosensitive element. In particular, the first measurement window ends before a point in time when light being reflected from the measurement chamber, for example a reflector of the measurement chamber, could hit the photosensitive element. According to the improved concept, a method for detecting particles in a medium present in a measurement chamber is provided, wherein a sensor device comprising an emitter unit and a photosensitive element is arranged inside the measurement chamber, and a reflector is arranged on a side of the measurement chamber opposite to the sensor device. The method comprises emitting by an emitter unit a first pulse of light into the measurement chamber, wherein the first pulse is emitted in a specified emission direction of the emitter unit. First reflected fractions of the first pulse, in particular reflected from particles in the medium, are detected by a photosensitive element during a first time window. The method further comprises determining, for example by means of a processing unit, an amount of particles in the medium depending on the detection of the first reflected fractions during the first time window. A particle measurement signal may for example be generated based on the determined amount of particles in the medium.

A path with minimum length for a light ray being emitted by the emitter unit, in particular in the emission direction, being subsequently reflected from a reflector of the measurement chamber and being detected by the photosensitive element is defined by the emission direction and by a mutual arrangement of the reflector, the emitter unit and the photosensitive element. The mutual arrangement may for example include orientations of the reflector, the emitter unit and/or the photosensitive element.

A difference between a starting time of the first pulse and an end time of the first time window is smaller than a time-of-flight, TOF, for light propagating along the path with minimum length.

Consequently, the first reflected fractions of light detected during the first time window are not subject to reflections from the measurement chamber, in particular the reflector, and are therefore not subject to absorption by contamination of the measurement chamber, in particular the reflector. Therefore, an accuracy of the determined amount of particles in the medium may be increased. Furthermore, a longtime reliability of a sensor system using a method according to the improved concept may be increased.

In case a plurality of paths for a light ray being emitted by the emitter unit, reflected from the reflector and detected by the photosensitive element with different path lengths exist, the path with minimum length corresponds to one of the plurality of paths having a minimum path length.

It is pointed out that the light ray mentioned for specifying the path with minimum length is for example a virtual or imagined light ray that is not necessarily actually emitted by the emitter unit. Said light ray does for example not include any reflections except reflections from the reflector, in particular it does not include any reflections from particles in the medium within the measurement chamber.

However, depending on a detailed implementation of the measurement chamber and the mentioned mutual arrangement, said light ray may be subject to one or more reflections from the reflector, wherein the reflector may comprise one or more reflector components that may or may not be connected to each other.

The reflector is arranged in the measurement chamber such that light being emitted by the emitter unit in the emission direction is reflected by the reflector and subsequently hits the photosensitive element.

In some implementations, the reflector is represented by one or more components, in particular housing components, of the measurement chamber. In alternative implementations, the reflector comprises one or more mirrors or plastic components arranged in the measurement chamber. The plastic components may for example be black plastic components, in particular if the light of the first pulse is infrared light. For example, plastic material may be used that appears black for the human eye may feature a substantial reflectivity for infrared light, for example approximately 20% for example for a wavelength range around 900nm.

The measurement chamber may for example serve for generating a dark or shaded measurement environment, in particular may be optically closed. In this way, measurement errors due to ambient light may be reduced.

According to some implementations, the medium present in the measurement chamber is air.

According to some implementations, the medium present in the measurement chamber is a liquid, for example water or another liquid solvent or liquid substance.

The emitter unit may for example comprise a first emitter configured to emit the first pulse. The emission direction is then given by a specified emission direction of the first emitter. In some implementations, the first emitter comprises a laser, for example a laser diode, a vertical-cavity surface-emitting laser, VCSEL, an edge-emitting semiconductor laser or another laser.

Using a laser may have the advantage that spectral shifts of light due to an interaction of the light with contamination, for example on the reflector, may be negligible. Furthermore, using a laser may result in a unique emission direction of the first emitter. Consequently, paths for a light ray being emitted by the first emitter, reflected from the reflector and detected by the photosensitive element may all have the same or substantially the same path length.

Above and in the following, any mentioned difference between points in time corresponds to an absolute value of the difference between points in time.

In some implementations, the described steps of emitting the first pulse and detecting the first reflected fractions are comprised by a measurement cycle. The measurement cycle may be repeated several times in a cyclic manner and the amount of particles may be determined depending on the detection during the respective first time windows of the several measurement cycles. Consequently, the measurement accuracy may be further increased.

The first pulse may for example have a pulse length in the order of several nanoseconds, tens of nanoseconds or hundreds of nanoseconds. One of the measurement cycles may for example have a period in the order of microseconds, tens of microseconds or hundreds of microseconds.

The photosensitive element is configured for time-resolved light detection, in particular for high-speed time-resolved light detection. In some implementations, the photosensitive element comprises a high-speed photon detecting element.

According to some implementations, the photosensitive element comprises one or more avalanche photodiodes, APDs, for example one or more arrays of APDs. In some implementations, the photosensitive element comprises one or more single-photon avalanche diodes, SPADs, for example one or more arrays of SPADs.

According to some implementations, determining the amount of particles depending on the detection during the first time window includes counting a number of light reflections impinging on photosensitive element during the first time window.

In this way, it can be determined how many reflections per time unit occur during the first time window due to reflections from the particles in the medium. The particle measurement signal may then comprise histogram data representing the counts, in particular corresponding to the several measurement cycles. Consequently, the amount of particles may be computed based on the counted number of light reflections impinging on the photosensitive element during the first time window.

According to some implementations, a starting time of the first time window is equal to or later than the starting time of the first pulse, in particular is synchronized with the starting time of the first pulse.

The sensor device may comprise a carrier on which the emitter unit and the photosensitive element are mounted. In particular, the photosensitive element and the emitter unit may be arranged on a common plane given by a surface of the carrier. The sensor device may further comprise a cover or an encasement, in particular an optically transparent or translucent cover or encasement, the cover or encasement covering the emitter unit and the photosensitive element.

In such implementations, one or more optical crosstalk paths between the emitter unit and the photosensitive element may exist. The one or more optical crosstalk paths may correspond to paths for light rays being emitted by the emitter unit, for example the first emitter, being reflected by the cover or encasement or by residues or contamination on the cover or encasement and reaching the photosensitive element. Light rays propagating along one of the optical crosstalk paths may for example not leave the sensor device or not propagate beyond the contamination on the cover or encasement. Therefore, such light rays may for example not be reflected by the particles in the medium.

Implementations where the starting time of the first time window is later than the starting time of the first pulse may have the advantage that no or a reduced amount of light reflections corresponding to the optical crosstalk paths may be detected by the photosensitive element during the first time window, which may further increase the measurement accuracy.

In some implementations, a difference between the end time of the first pulse and the starting time of the first time window is greater than a TOF for light propagating along the one or more optical crosstalk paths. Then, an influence of optical crosstalk on the first reflected fractions may for example be reduced or avoided.

According to some implementations, the method further comprises detecting during one or more further time windows further reflected fractions of the first pulse. The method further comprises determining a first compensation factor depending on the detection during the one or more further time windows. Therein, the amount of particles is determined depending further on the first compensation factor.

In such implementations, determining the amount of particles in the medium may for example comprise determining an estimated amount of particles from the first reflections detected during the first time window and correcting the estimated amount of particles using the first compensation factor.

The further reflected fractions of the first pulse may for example be subject to light absorption by the contamination of the measurement chamber, in particular the reflector, and/or the contamination of the cover or encasement. Consequently, the first compensation factor may include information about said light absorption and the respective contaminations. Furthermore, the first reflected fractions detected during the first time window may also be subject to light absorption by the contamination of the cover or encasement.

It may for example be assumed that the contamination of the cover or encasement and the contamination of the measurement chamber, in particular the reflector, are equal or similar. In particular, an effect of the contamination of the reflector on the first pulse may be assumed to be equal or similar to an effect of the contamination of the cover or encasement on the first pulse. Then, it follows that by correcting the estimated amount of particles using the first compensation factor, an effect of the light absorption by the contamination of the cover or encasement on the determined amount of particles in the medium may be reduced or removed. Therefore, the measurement accuracy and a corresponding longtime reliability of a sensor system using a method according to the improved concept may be further improved.

According to some implementations, determining the first compensation factor comprises comparing at least one compensation measurement value or compensation measurement signal depending on the detection during the one or more further time windows to at least one predetermined first reference value.

The at least one first reference value is for example determined by means of at least one respective reference measurement. Therein, it is ensured that during the at least one reference measurement there is no or a negligible contamination of the measurement chamber, in particular the reflector, and the cover or encasement. For example, the at least one reference measurement may be carried out during or directly after a manufacturing of the sensor system utilizing the method according to the improved concept. The at least one first reference value is for example stored in a memory of the sensor system.

According to some implementations, the one or more further time windows comprise a second time window after the first time window. The method comprises detecting during the second time window second reflect fractions of the first pulse by the photosensitive element. The first compensation factor is determined depending on the detection during the second time window.

According to some implementations, determining the first compensation factor includes counting a number of light reflections impinging on the photosensitive element during the second time window.

According to some implementations, the TOF for light propagating along the path with minimum length is greater than a difference between the end time of the first pulse and a starting time of the second time window and is smaller than a difference between the starting time of the first pulse and an end time of the second time window.

Thus, at least a part of light of the first pulse being reflected from the reflector may reach the photosensitive element during the second time window. Consequently, the second reflected fractions of light detected during the second time window are for example subject to reflections from the measurement chamber, in particular the reflector, and therefore may be subject to absorption by the contamination of the measurement chamber, in particular the reflector. In addition, the second reflected fractions may be subject to light absorption by the contamination of the cover or encasement. Thus, the first compensation factor may be used to correct the estimated amount of particles.

The at least one first reference value may comprise a reference value for the second time window. The reference value for the second time window is determined by means of a reference measurement for the second time window, where it is ensured that there is no or a negligible contamination of the measurement chamber and the cover or encasement. Determining the first compensation factor may include comparing a compensation measurement value or compensation measurement signal depending on the detection during the second time window to the reference value for the second time window.

According to some implementations, the TOF for light propagating along the path with minimum length is greater than a difference between the starting time of the first pulse and a starting time of the second time window and/or is smaller than a difference between the end time of the first pulse and an end time of the second time window.

In such implementations, more, for example all or essentially all, parts of light of the first pulse being reflected from the reflector may reach the photosensitive element during the second time window, which may increase accuracy of the first compensation factor.

According to some implementations, the one or more further time windows comprise a third time window before the first time window. The method comprises detecting during the third time window third reflected fractions of the first pulse by the photosensitive element. The first compensation factor is determined depending on the detection during the third time window.

According to some implementations, the determining the first compensation factor includes counting a number of light reflections impinging on the photosensitive element during the third time window.

According to some implementations, a TOF for light propagating along an optical crosstalk path between the emitter unit, in particular the first emitter, and the photosensitive element is greater than a difference between the end time of the first pulse and a starting time of the third time window and is smaller than a difference between the starting time of the first pulse and an end time of the third time window.

Thus, at least a part of light of the first pulse being reflected from the contamination of the cover or encasement may reach the photosensitive element during the third time window. The more contaminated the cover or encasement is, the more light of the first pulse may be reflected or scattered by the contamination on the cover or encasement and the more optical crosstalk will result. Thus, the third reflected fractions of light detected during the third time window depend on the contamination on the cover or encasement. Therefore, the first compensation factor may be used to correct the estimated amount of particles.

The at least one first reference value may comprise a reference value for the third time window, in particular a reference value for optical crosstalk. The reference value for the third time window is for example determined by means of an optical crosstalk reference measurement, where it is ensured that there is no or a negligible contamination of the cover or encasement. Determining the first compensation factor may include comparing a compensation measurement value or a compensation measurement signal depending on the detection during the third time window to the reference value for the third time window.

According to some implementations, the TOF for light propagating along the optical crosstalk path is greater than a difference between the starting time of the first pulse and a starting time of the third time window and/or is smaller than a difference between the end time of the first pulse and an end time of the third time window.

A measurement cycle of the measurement cycles being repeated several times in a cyclic manner may comprise the steps of detecting the further reflected fractions, in particular the second and/or the third reflected fractions. The first compensation factor may be determined depending on the detection during the respective one or more further time windows, in particular during the respective second and/or third time window, of the several measurement cycles.

According to some implementations, the method further comprises emitting by the emitter unit a second pulse of light into the measurement chamber and detecting during a fourth time window reflected fractions of the second pulse. The method further comprises determining a second compensation factor depending on the detection during the fourth time window. Therein, the amount of particles is determined depending further on the second compensation factor.

In such implementations, determining the amount of particles in the medium may for example comprise determining the estimated amount of particles from the first reflections detected during the first time window and correcting the estimated amount of particles using the second compensation factor.

In some implementations, the second pulse is emitted by the first emitter in the emission direction. In alternative implementations, the second pulse is emitted by a second emitter of the emitter unit in a specified further emission direction of the emitter unit, in particular of the second emitter. The further emission direction may be equal to or different from the emission direction.

In some implementations, the second emitter comprises an LED or a laser, for example a laser diode, a vertical-cavity surface-emitting laser, VCSEL, an edge-emitting semiconductor laser or another laser.

According to some implementations, the reflected fractions of the second pulse are detected by the photosensitive element.

According to some implementations, the reflected fractions of the second pulse are detected by a further photosensitive element.

According to some implementations, the further photosensitive element is comprised by the sensor device and mounted on the carrier. The cover or encasement covers the further photosensitive element.

According to some implementations, detecting the reflected fractions of the second pulse includes sensing an intensity of light reaching the further photosensitive element during the fourth time window.

According to some implementations, the further photosensitive element comprises one or more charge coupled devices, CCDs.

According to some implementations, the further photosensitive element comprises one or more photodiodes, for example conventional photodiodes, in particular neither an APD nor a SPAD.

For sensing the intensity of light reaching the further photosensitive element during the fourth time window, the further photosensitive element is not required to be particularly configured for time-resolved light detection, in particular high-speed time-resolved light detection.

According to some implementations, a further path with minimum length for a light ray being emitted by the emitter unit, reflected from the reflector and detected by the further photosensitive element is defined by the further emission direction of the emitter unit, in particular of the first or second emitter, and by a mutual arrangement of the reflector, the emitter unit, in particular the first or second emitter, and the further photosensitive element. A TOF for light propagating along the further path with minimum length is greater than a difference between an end time of the second pulse and a starting time of the fourth time window and is smaller than a difference between the starting time of the second pulse and an end time of the fourth time window.

Consequently, the reflected fractions of light detected during the fourth time window are for example subject to reflections from the measurement chamber, in particular the reflector, and therefore may be subject to absorption by contamination of the measurement chamber, in particular the reflector. In addition, the reflected fractions of the second pulse may be subject to light absorption by the contamination on the cover or encasement. Thus, the second compensation factor may be used to correct the estimated amount of particles.

According to some implementations, the determining of the second compensation factor comprises comparing at least one compensation measurement value or compensation measurement signal depending on the detection during the fourth time window to a predetermined further reference value.

The further reference value is determined by means of a reference measurement, where it is ensured that there is no or a negligible contamination of the measurement chamber and the cover or encasement.

According to some implementations, the TOF for light propagating along the further path with minimum length is greater than a difference between the starting time of the second pulse and a starting time of the fourth time window and/or is smaller than a difference between the end time of the second pulse and an end time of the further time window.

In some implementations, the described steps of emitting the second pulse and detecting the reflected fractions of the second pulse are comprised by a further measurement cycle. The further measurement cycle may be repeated several times in a cyclic manner and the second compensation factor may be determined depending on the detection during the respective fourth time windows of the several further measurement cycles. Consequently, the measurement accuracy may be further increased.

According to some implementations, the sensor device is arranged inside the measurement chamber and connected to the measurement chamber.

In some implementations, the sensor device is removable from the measurement chamber.

In such implementations, the sensor device may for example be comprised by an electronic device, such as a smartphone, a tablet computer, a smartwatch or the like.

According to some implementations, the method further comprises determining a quality index depending on the first and/or the second compensation factor. The quality index is indicative of the contamination of the cover or encasement and/or of the measurement chamber, in particular the reflector.

Depending on the quality index, an alert signal may be generated for example to signal that a measurement accuracy may lie in an undesired range. In response to the alert signal, a user may for example decide to clean or replace the measurement chamber and/or the sensor device.

In some implementations, an emission intensity of the first and/or the second pulse may be adjusted, for example increased, depending on the quality index and/or the alert signal. In this way, the measurement accuracy may for example be kept sufficiently high for a longer time. Thus, longtime reliability may be further increased.

According to the improved concept, also a sensor system with a measurement chamber for detecting particles in a medium present in the measurement chamber is provided, wherein a sensor device comprising an emitter unit and a photosensitive element is arranged inside the measurement chamber, and a reflector is arranged on a side of the measurement chamber opposite to the sensor device. The emitter unit is configured to emit a first pulse of light into the measurement chamber in a specified emission direction of the emitter unit. The photosensitive element is configured to detect first reflected fractions of the first pulse during a first time window. The system further comprises a processing unit configured to determine an amount of particles in the medium depending on the detection during the first time window. A path with minimum length for a light ray being emitted by the emitter unit, reflected from a reflector of the measurement chamber and detected by the photosensitive element is defined by the emission direction and by a mutual arrangement of the reflector, the emitter unit the photosensitive element. A difference between a starting time of the first pulse and an end time of the first time window is smaller than a TOF for light propagating along the path with minimum length.

According to some implementations, the system comprises an integrated circuit, IC, comprising the photosensitive element and the processing unit. According to some implementations, the IC further comprises the emitter unit.

Further implementations of the sensor system according to the improved concept are readily derived by the various implementations of the method according to the improved concept and vice versa. In particular, the processing unit of the sensor system may be configured to carry out or control the various steps comprised by a method according to the improved concept excluding for example such steps that are obviously carried out by another component of the sensor system, such as the emitter unit or the photosensitive element.

In the following, the improved concept is explained in detail with the aid of exemplary implementations by reference to the drawings. Components that are functionally identical or have an identical effect may be denoted by identical references. Identical components and/or components with identical effects may be described only with respect to the figure where they occur first. Their description is not necessarily repeated in subsequent figures.

In the drawings,

Figure 1A shows an exemplary implementation of a sensor system according to the improved concept and aspects of an exemplary implementation of a method according to the improved concept;
Figure 1B shows a timing diagram according to the improved concept;
Figure 2 shows a further exemplary implementation of a sensor system according to the improved concept and aspects of a further exemplary implementation of a method according to the improved concept;
Figure 3 shows a further exemplary implementation of a sensor system according to the improved concept and aspects of a further exemplary implementation of a method according to the improved concept;
Figure 4 shows timing diagrams of measurement signals of a further exemplary implementation of a sensor system according to the improved concept; and
Figure 5 shows a block diagram of an exemplary implementation of a sensor device of a sensor system according to the improved concept.

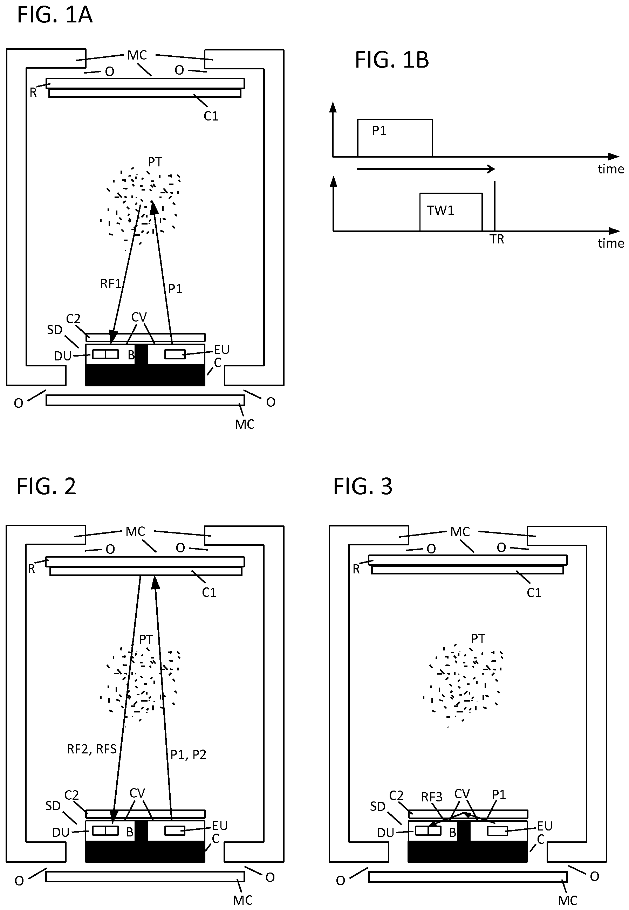

Figure 1A shows an exemplary implementation of a sensor system according to the improved concept and aspects of an exemplary implementation of a method according to the improved concept.

The sensor system comprises a measurement chamber MC, for example an optically closed measurement chamber MC, and a sensor device SD arranged inside the measurement chamber MC. The measurement chamber MC also comprises a reflector R arranged, on a side of the measurement chamber MC opposite to the sensor device SD.

The sensor device SD comprises for example a carrier C, an emitter unit EU arranged on the carrier C and a detector unit DU arranged on the carrier C. The detector unit DU and the emitter unit EU are for example covered by a cover or encasement CV of the sensor device SD. Optionally, the sensor device SD may comprise a light barrier B arranged on the carrier C between the detector unit DU and the emitter unit EU to block light reaching the detector unit DU from the emitter unit EU directly.

The emitter unit EU comprises an emitter, for example a laser, in particular a VCSEL, configured to emit light, in particular in a pulsed manner, in a predefined emission direction of the emitter. The detector unit DU comprises a photosensitive element, in particular a photosensitive element capable of time-resolved light detection. The photosensitive element may, for example, comprise one or more SPADs, in particular an array of SPADs.

Figure 1A also shows particles PT present in a medium, for example air or a liquid such as water, within the measurement chamber MC. The particles PT may have entered the measurement chamber MC for example via openings O in the measurement chamber MC. It is highlighted that, although the particles PT are depicted in Figure 1A as being located in the center of the measurement chamber, they may in reality be distributed, in particular distributed essentially homogenously, within the measurement chamber MC.

Figure 1A also shows a first contamination C1 located on a surface of the reflector R facing the sensor device SD. Furthermore, a second contamination C2 is shown to be located on top of the sensor device SD, in particular the cover or encasement CV. Further contamination of the measurement chamber, for example on sidewalls of the measurement chamber, may be present but are not shown in Figure 1A.

Neglecting the presence of the contamination C1, C2 and also the presence of the particles PT, a ray of light emitted by the emitter along the emission direction would reach the reflector R without any reflection or scattering, would undergo a specular reflection from the reflector R and then would reach the photosensitive element again without being reflected or scattered. The described path represents a path with minimum length. A time-of-flight, TOF, for light propagating along the path with minimum length is for example determined by a distance between the sensor device SD and the reflector R, a distance between the emitter and the photosensitive element and the speed of light.

In operation, the emitter is configured to emit a first pulse of light P1 in the emission direction. In the presence of the particles PT, parts of the first pulse P1 are reflected by the particles PT and consequently first reflected fractions RF1 of the first pulse P1 may reach the photosensitive element. The photosensitive element is configured to detect the first reflected fractions RF1 during a first time window TW1 as shown in Figure 1B, which shows a timing diagram including the first pulse P1 and the first time window TW1. Figure 1B also shows a reflection time TR corresponding to a point in time when light fractions of the first pulse P1 that propagate along the path with minimum length would reach the photosensitive element.

According to the improved concept, the reflection time TR does not lie within the first time window TW1, in particular lies after the first time window TW1. In particular, a time difference between a starting time of the first pulse P1 and the reflection time TR corresponds to the TOF for light propagating along the path with minimum length, as indicated by a horizontal arrow in Figure 1B. According to the improved concept, an end time of the first time window TW1 lies before the reflection time TR.

As mentioned above, the photosensitive element may comprise a SPAD or an array of SPADs. Therefore, the photosensitive element may for example be configured to count a number of light reflections impinging on the photosensitive element during the first time window TW1.

The described measurement is, for example, repeated at high frequency, for example with a frequency lying in the kHz range or range of tens of kHz. In each measurement cycle, a first pulse P1 may be emitted by the emitter and first reflected fractions RF1 may be detected by the photosensitive element during a respective first time window TW1 of the measurement cycle. Depending on the counted reflections impinging on the photosensitive element during each of the measurement cycles, for example histogram data may be generated by a processing unit PU (not shown in Figure 1A) depending on the counted light reflections.

Depending on the detections of the photosensitive element during the first time window TW1, for example during the first time windows TW1 of the repeated measurement cycles, the processing unit PU may determine an amount of particles in the medium, for example based on the histogram data.

An advantage of the described method for particle detection is that the detection of the first reflected fractions RF1 during the first time windows TW1 does not depend on the contamination C1. This is due to the fact that the first reflected fractions RF1 have not been subject to a reflection from the reflector R due to the described timing of the first time window TW1, in particular due to the end time of the first time window TW1 lying before the reflection time TR.

Therefore, the detection of the first reflected fractions RF1 is not subject to effects of light absorption by the first contamination C1. Therefore, accuracy of the measurement, in particular accuracy of the determined amount of particles, may be increased.

In situations, where the second contamination C2 is present on the cover or encasement CV, the measurement explained with respect to Figures 1A and 1B may have an error due to light absorption by the second contamination C2.

Further implementations of the method according to the improved concept may reduce also the error due to the absorption by the second contamination C2 as explained with respect to Figures 2 and 3.

Figure 2 shows a further exemplary implementation of a sensor system according to the improved concept and further aspects of an exemplary implementation of a method according to the improved concept. For example, the sensor system of Figure 2 may be based on or may be equal to the sensor system of Figure 1A.

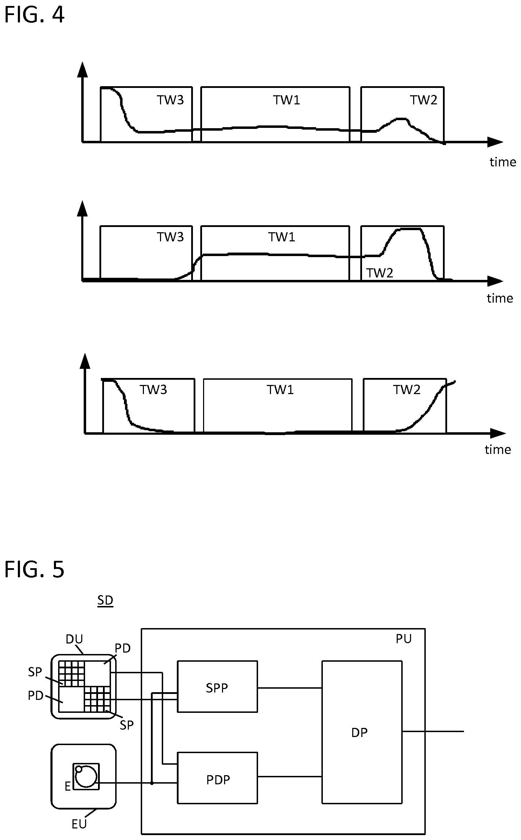

Figure 2 shows a situation where the first pulse P1 is emitted by the emitter and second reflected fractions RF2 of the first pulse P1 are detected by the photosensitive element during a second time window TW2. The second time window TW2 lies after the first time window TW1 as shown in Figure 4. In particular, the reflection time TR may lie in the second time window TW2. Therefore, the reflected fractions RF2 of the first pulse P1 are subject to light absorption by the second contamination C2 and by the first contamination C1. Therefore, the detection of the second reflected fractions RF2 during the second time window TW2 by the photosensitive element may be used to calculate a first compensation factor. By means of the first compensation factor and the detection of the first reflected fractions RF1 during the first time window TW1, the amount of particles may be determined with an improved accuracy.

For example, the first compensation factor may be calculated depending of a reference value for light detection during the second time window TW2. For example, a reference measurement may be carried out in a situation where the first and the second contamination C1, C2 and also the particles PT are not present, for example directly after manufacturing of the sensor system.

Denoting by MV a measurement value for the detection of the second reflected fractions RF2 in the presence of the contaminations C1, C2 and the particles PT and denoting by RV a reference value for the detection during the second time window TW2 without the contaminations C1, C2 and without the particles PT, the first compensation factor CMP may, for example, be calculated according to the formula

$$CMP = 1-(1-MV/RV)/2 \qquad . \qquad\qquad (1)$$

The first compensation factor CMP may for example be considered to represent a transmission-of-optical-path, TOP, value. The TOP value is for example a measure for the amount of light propagating along the path with minimum length being transmitted compared to the respective amount of light being absorbed.

Denoting by EP an estimated amount of particles determined based on the detection of the first reflected fractions RF1 as explained with respect to Figure 1A, an improved value IP for the amount of particles may then be calculated, for example based on the formula

$$IP = EP/CMP \ . \qquad\qquad (2)$$

The detection of the second reflected fractions RF2 may be repeated for each measurement cycle. The calculation of the first compensation factor and the improved amount of particles may then be carried out based on the measurement result from the different measurement cycles.

It is highlighted that the calculation of the improved value IP for the amount of particles according to formulas (1) and (2) represents only an example calculation. In particular, other suitable formulas may be used for calculating the first compensation factor and/or the improved value for the amount of particles based on the first compensation factor. For example, a coefficient or lookup table, depending for example on a surface of the reflector R, could alternatively or additionally be used to improve the accuracy of the calculation of the amount of particles.

During the operation time or lifetime of the sensor system, the first compensation factor or the TOP value may become lower because the contaminations C1, C2 may increase. For example to check whether the TOP becomes too low for reliable operation, a level of quality or quality index could be calculated based on the first compensation factor. A user of the sensor system could, for example, replace or clean the sensor system depending on the quality index. Alternatively or in addition, an emission intensity of light emitted by the emitter may be increased depending on the quality index. In this way, a reliable operation may be ensured for a longer time.

In further implementations the determination of the amount of particles in the medium may be further improved by removing or avoiding an effect of the particles PT on the first compensation factor. This could, for example, be done to first order with a linear estimation and/or for example using an additional lookup table.

In some implementations the sensor device SD comprises a further photosensitive element, for example a photodiode, in particular a conventional photodiode. In particular, the further photosensitive element does not necessarily comprise a SPAD or an array of SPADs. In such implementations, a second compensation factor may be determined instead of or in addition to the first compensation factor.

The emitter unit, for example the emitter or a further emitter, may be configured to emit a second pulse of light P2, for example in a further emission direction. The further emission direction may be equal to the emission direction of the emitter, in particular if the second pulse P2 is emitted by the emitter. In implementations where the second pulse P2 is emitted by the further emitter, the further emission direction may be equal or different from the emission direction of the emitter.

The further photosensitive element is configured to detect reflected fractions RFS of the second pulse P2 during a further time window. The detection of the reflected fractions RFS of the second pulse P2 includes, for example, sensing an intensity of light reaching the further photosensitive element during the further time window. In particular, a counting of reflections impinging on the further photosensitive element during the further time window is not necessary.

A timing of the further time window may be such that the reflected fractions RFS of the second pulse P2 may comprise reflections from the reflector R. In particular, a further reflection time corresponds to a point in time when light fractions of the second pulse P2 that propagate along a further path with minimum length would reach the photosensitive element. Therein, the further path with minimum length is a path for a light ray being emitted by the emitter unit, in particular along the further emission direction, reflected from the reflector R and detected by the further photosensitive element. The further reflection time may lie within the further time window.

The further path with minimum length may be equal to the path with minimum length or different from that, depending on the further emission direction and a position of the further photosensitive element with respect to the emitter unit and the reflector R.

As for the emission of the first pulse P1 and the detection of the first and/or second reflected fractions RF1, RF2, also an emission of the second pulse P2 and the detection of the reflected fractions RFS of the second pulse P2 may be repeated in a cyclic manner.

While the first pulses may be in particular high speed pulses with pulse lengths in the order of nanoseconds or tens of nanoseconds, the second pulses P2 may, for example, be slower, for example in the range of microseconds.

A second compensation factor depending on the detection of the reflected fractions RFS of the second pulse P2 may for example by calculated analogously as described above with respect to the first compensation factor.

In some implementations, a synchronous demodulator may be used, which could have the advantage that an effect of ambient light may be reduced.

Figure 3 shows a further exemplary implementation of a sensor system according to the improved concept and further aspects of an exemplary implementation of a method according to the improved concept. For example, the sensor system of Figure 3 may be based on or may be equal to the sensor system of Figure 1A.

Figure 3 shows third reflected fractions RF3 of the first pulse P1. The third reflected fractions RF3 are subject to a reflection from the cover or encasement CV and/or from the second contamination C2 being present on the cover or encasement CV. In this way, by being reflected from the second contamination C2, the third reflected fractions RF3 may reach the photosensitive element without having left the sensor device SD. This phenomenon may be denoted as optical crosstalk.

Alternatively or in addition to the detection of the second reflected fractions RF2 of the first pulse P1 and/or the reflected fractions RFS of the second pulse P2 as described with respect to Figure 2, the third reflected fractions RF3 of the first pulse P1 may be detected by the photosensitive element during a third time window TW3 as shown in Figure 4. The third time window TW3 lies before the first time window TW1. In particular, a TOF for light propagating along an optical crosstalk path between the emitter and the photosensitive element is greater than a difference between an end time of the first pulse and a starting time of the third time window and is smaller than a difference between the starting time of the first pulse and an end time of the third time window.

A crosstalk compensation factor may for example be determined depending on the detection of the third reflected fractions RF3. In particular, the higher a measurement signal due to the reflected fractions RF3 is, the more contamination C2 is present. Consequently, by correcting the amount of particles determined based on the detection of the first reflected fractions RF1 or the improved amount of particles calculated using the first and/or the second compensation factor using the crosstalk compensation factor, the measurement accuracy may be further improved.

Figure 4 shows timing diagrams of measurement signals of a further exemplary implementation of a sensor system according to the improved concept. The sensor system may for example be a sensor system as described with respect to Figures 1A, 1B, 2 and 3.

In each of the panels of Figure 4, the first, the second and the third time window TW1, TW2, TW3 are shown. Time is shown on the x-axes. On the y-axes a measurement signal generated by the processing unit PU based on the detections of the photosensitive element during the first, the second and the third time window TW1, TW2, TW3 is shown. The measurement signal may for example correspond to the histogram data generated based on the detection of the SPAD or SPAD array of the detector unit DU.

The top panel of Figure 4 corresponds to a situation where the first and the second contamination C1, C2 as well as the particles PT are present in the measurement chamber MC. During the third time window TW3 the measurement has a high value due to optical crosstalk as described with respect to Figure 3. During the first time window TW1 the measurement signal has an intermediate value due to the detection of the first reflected fractions RF1. During the second time window TW2 the measurement signal is again increased with respect to the first time window TW1 due to the detection of the reflected fractions RF2 being reflected from the reflector R.

The middle panel of Figure 2 corresponds to a situation where the particles PT are present in the measurement chamber, but the first and the second contaminations C1 and C2 are not present. This may, for example, correspond to a situation shortly after manufacturing of the sensor system. In this case, the measurement signal is low or zero in the third time window TW3 since an amount of optical crosstalk is reduced because the second contamination C2 is not present. The measurement signal is increased in the first time window TW1 compared to the top panel of Figure 4 since the first reflected fractions RF1 are not subject to absorption by the second contamination C2. The measurement signal is also increased in the second time window TW2 with respect to the top panel of Figure 4 since the second reflected fractions RF2 are neither subject to light absorption by the first contamination C1 nor by the second contamination C2.

The lower panel of Figure 4 corresponds to a situation, where the first and the second contaminations C1, C2 are present, but no particles PT or a negligible amount of particles PT is present in the measurement chamber MC. In this case, the crosstalk reflected in the measurement signal during the third time window TW3 has a similar value as in the top panel of Figure 4. Compared to the top and the middle panels of Figure 4, the measurement signal is strongly reduced during the first time window in the bottom panel of Figure 4. This is due to the fact that there are no or essentially no reflections from the particles PT and therefore, during the first time window TW1, no or a negligible amount of first reflected fractions RF1 is reaching the photosensitive unit. In the second time window TW2, the measurement signal is again increased with respect to the first time window TW1 due to the detection of the second reflected fractions RF2 being reflected from the reflector R.

Figure 5 shows a block diagram of an exemplary implementation of a sensor device SD of a sensor system according to the improved concept.

The sensor device SD comprises a processing unit PU, a detector unit DU and an emitter unit EU. The emitter unit EU comprises an emitter E, for example a laser, in particular a VCSEL or an edge emitter laser. The detector unit DU comprises a photosensitive element including for example an array of SPADs SP. Optionally, the detector unit DU comprises a further photosensitive element being including, for example one or more photodiodes PD, in particular conventional photodiodes.

The processing unit PU comprises, for example, a data processor DP, a SPAD processor SPP, and optionally a photodiode processor PDP. The SPAD array SP is connected to the SPAD processor SPP, while the optional photodiode PD is, for example, connected to the optional photodiode processor PDP. Furthermore, the emitter E is connected to the SPAD processor SPP and optionally to the optional photodiode processor PDP. The SPAD processor SPP, and optionally the photodiode processor PDP, are connected to the data processor DP. The operation of the sensor device SD and the sensor system is as has been explained with respect to Figures 1A to 4.

Based on the detection of the first reflected fractions RF1 during the first time window TW1, and optionally based on the second reflected fractions RF2 detected during the second time window TW2 and/or the third reflected fractions RF3 during the third time window TW3, the SPAD processor SPP is, for example, configured to generate histogram data based on the counted reflections impinging on the SPAD array SP during the respective time windows. Based on the respective histogram data, the data processor DP is for example configured to compute the amount of particles in the medium, the first compensation factor, the crosstalk compensation factor and/or the improved amount of particles based on the estimated amount of particles and the respective compensation factors.

Optionally, the photodiode processor PDP is configured to generate a photodiode signal depending on a detected intensity of the reflected fractions RFS of the second pulse P2 during the further time window by the one or more photodiodes PD. Based on the photodiode signal, the data processor DP is for example configured to determine the second compensation factor and to correct the amount of particles in the medium as described with respect to Figure 2.

In the description with respect to Figures 1A to 5, the first, second and third reflected fractions RF1, RF2, RF3 were considered to be reflected fractions of the first pulse P1. However, the measurements of the different reflected fractions can in principle also be carried out with respect to first pulses P1 from different measurement cycles.

Furthermore, in the examples of Figures 1A, 2 and 3, the detector unit and the emitter unit DU, EU are for example both contained by a single chip module of the sensor device SD. In some implementations, the detector unit DU, the emitter unit, EU and the processing unit PU may, for example, be comprised by the same IC. In alternative implementations, the emitter EU may be implemented separately from the IC with the detector unit DU. In such implementations, the emitter unit EU may be comprised by the same chip module as the IC comprising the detector unit DU and the processing unit PU or may be implemented in a separate chip module.

In alternative implementations, the sensor system may comprise additional photosensitive elements, for example implemented in the detector unit DU or in additional detector units, which are not shown in Figures 1A to 5. The photosensitive element, the further photosensitive element and/or the additional photosensitive elements may, for example, by equipped with different optical filters for the detection of light with different wavelengths. In this way, for example, different particle sizes, different particle types or different types of the contaminations C1, C2 may be detected by means of the different photosensitive elements. The described implementations may be readily adapted to account for the additional photosensitive elements.

Analogously, in alternative implementations, the sensor system may comprise alternatively or in addition to the additional photosensitive elements, additional emitter units or emitters that are configured to emit light with different wavelengths. Also in this way different particle sizes, different particle types or different types of the contaminations C1, C2 may be distinguished.

In implementations where the medium is air, the sensor system or method according to the improved concept may for example be used to determine a degree of air pollution or air contamination or a degree of air quality, respectively.

In implementations where the medium is a liquid, for example water or another liquid solvent or liquid substance, the sensor system or method according to the improved concept may for example be used to determine a degree of liquid or water contamination or a degree of liquid or water quality, respectively. Such implementations may for example be used in a washing machine, a dishwasher or a process engineering system, in particular a physical, chemical or biological engineering system.

Reference numerals

| | |
|---|---|
| MC | measurement chamber |
| R | reflector |
| O | openings |
| SD | sensor device |
| DU | detector unit |
| EU | emitter unit |
| C | carrier |
| CV | cover or encasement |
| B | light barrier |
| PT | particles in medium |
| C1, C2 | contamination |
| P1, P2 | light pulses |
| RF1, RF2, RF3, RFS | reflected fractions |
| TW1, TW2, TW3 | time windows |
| TR | reflection time |
| SP | SPAD arrays |
| PD | photodiodes |
| E | emitter |
| SPP | SPAD processor |
| PDP | photodiode processor |
| DP | data processor |
| PU | processing unit |

**Claims**

1. Method for detecting particles in a medium present in a measurement chamber (MC), wherein a sensor device (SD) is arranged inside the measurement chamber (MC), and wherein the sensor device comprises an emitter unit (EU) and a photosensitive element, the method comprising:

   - emitting by the emitter unit (EU) a first pulse of light (P1) into the measurement chamber (MC) in a specified emission direction of the emitter unit (EU);
   - detecting by the photosensitive element first reflected fractions (RF1) of the first pulse during a first time window (TW1); and
   - determining an amount of particles in the medium depending on the detection during the first time window (TW1);
   - wherein a path with minimum length for a light ray being emitted by the emitter unit (EU), reflected from a reflector (R) arranged in the measurement chamber (MC) on a side of the measurement chamber (MC) opposite to the sensor device (SD) and detected by the photosensitive element is defined by the emission direction and by a mutual arrangement of the reflector (R), the emitter unit (EU) and the photosensitive element; and
   - wherein a difference between a starting time of the first pulse (P1) and an end time of the first time window (TW1) is smaller than a time-of-flight for light propagating along the path with minimum length.

2. Method according to claim 1, wherein the method further comprises

   - detecting during one or more further time windows (TW2, TW3)

      - reflected fractions (RFS) of a second pulse of light (P2) emitted by the emitter unit (EU) into the measurement chamber (MC); and/or
      - further reflected fractions (RF2, RF3) of the first pulse (P1); and

   - determining at least one compensation factor depending on the detection during the one or more further time windows (TW2, TW3), wherein the amount of particles is determined further depending on the one or more compensation factors.

3. Method according to claim 2, wherein the determining of the at least one compensation factor comprises comparing at least one measurement value depending on the detection during the one or more further time windows (TW2, TW3) to at least one predetermined reference value.

4. Method according to one of claims 2 or 3, wherein

- the one or more further time windows (TW2, TW3) comprise a second time window (TW2) after the first time window (TW1);
- the method comprises detecting during the second time window (TW2) second reflected fractions (RF2) of the first pulse (P1) by the photosensitive element; and
- the at least one compensation factor is determined depending on the detection during the second time window (TW2).

5. Method according to claim 4, wherein the time-of-flight for light propagating along the path with minimum length

- is greater than a difference between an end time of the first pulse (P1) and a starting time of the second time window (TW2); and
- is smaller than a difference between the starting time of the first pulse (P1) and an end time of the second time window (TW2).

6. Method according to one of claims 2 to 5, wherein

- the one or more further time windows (TW2, TW3) comprise a third time window (TW3) before the first time window (TW1);
- the method comprises detecting during the third time window (TW3) third reflected fractions of the first pulse (P1) by the photosensitive element; and
- the at least one compensation factor is determined depending on the detection during the third time window (TW3).

7. Method according to claim 6, wherein a time-of-flight for light propagating along an optical crosstalk path between the emitter unit (EU) and the photosensitive element

- is greater than a difference between an end time of the first pulse (P1) and a starting time of the third time window (TW3); and
- is smaller than a difference between the starting time of the first pulse (P1) and an end time of the third time window (TW3).

8. Method according to one of claims 2 to 7, wherein

- the one or more further time windows (TW2, TW3) comprise a fourth time window;
- the method comprises detecting during the fourth time window the reflected fractions of the second pulse (P2) by a further photosensitive element; and
- the at least one compensation factor is determined depending on the detection during the fourth time window.

9. Method according to claim 8, wherein

- a further path with minimum length for a light ray being emitted by the emitter unit (EU), reflected from the reflector (R) and detected by the further photosensitive element is defined by a specified further emission direction of the emitter unit (EU) and by a mutual arrangement of the reflector (R), the emitter unit (EU) and the further photosensitive element;
- a time-of-flight for light propagating along the further path with minimum length is greater than a difference between an end time of the second pulse (P2) and a starting time of the fourth time window; and
- the time-of-flight for light propagating along the further path with minimum length is smaller than a difference between the starting time of the second pulse (P2) and an end time of the fourth time window.

10. Method according to one of claims 8 or 9, wherein the detecting the reflected fractions (RFS) of the second pulse (P2) includes sensing an intensity of light reaching the further photosensitive element during the fourth time window.

**11.** Method according to one of claims 2 to 10, further comprising determining a quality index depending on the at least one compensation factor, the quality index being indicative of a contamination of the emitter unit, the photosensitive element and/or the measurement chamber (MC).

**12.** Method according to one of claims 1 to 10, wherein the determining the amount of particles includes counting a number of light reflections impinging on the photosensitive element during the first time window (TW1).

**13.** Method according to one of claims 1 to 12, wherein the photosensitive element comprises one or more avalanche photodiodes and/or one or more single-photon avalanche diodes.

**14.** Sensor system for detecting particles in a medium present in a measurement chamber (MC) of the system, the system further comprising:

- a sensor device (SD) arranged inside the measurement chamber (MC), wherein the sensor device comprises an emitter unit (EU) and a photosensitive element
- the emitter unit (EU) configured to emit a first pulse (P1) of light into the measurement chamber (MC) in a specified emission direction of the emitter unit (EU);
- a reflector (R) arranged in the measurement chamber (MC) on a side of the measurement chamber (MC) opposite to the sensor device (SD),
- the photosensitive element configured to detect first reflected fractions (RF1) of the first pulse (P1) during a first time window (TW1); and
- a processing unit (PU) configured to determine an amount of particles in the medium depending on the detection during the first time window (TW1);
  wherein
- a path with minimum length for a light ray being emitted by the emitter unit (EU), reflected from the reflector (R) of the measurement chamber (MC) and detected by the photosensitive element is defined by the emission direction and by a mutual arrangement of the reflector (R), the emitter unit (EU) and the photosensitive element; and
- a difference between a starting time of the first pulse (P1) and an end time of the first time window (TW1) is smaller than a time-of-flight for light propagating along the path with minimum length.

**15.** System according to claim 14, the system comprising an integrated circuit comprising the photosensitive element and the processing unit (PU).

**Patentansprüche**

**1.** Verfahren zum Erfassen von Partikeln in einem Medium, das in einer Messkammer (MC) vorhanden ist, wobei eine Sensorvorrichtung (SD) im Inneren der Messkammer (MC) angeordnet ist, und wobei die Sensorvorrichtung eine Emittereinheit (EU) und ein lichtempfindliches Element umfasst, wobei das Verfahren umfasst:

- Abstrahlen, und zwar durch die Emittereinheit (EU), eines ersten Lichtimpulses (P1) in die Messkammer (MC) in einer spezifizierten Abstrahlrichtung der Emittereinheit (EU);
- Erfassen, und zwar durch das lichtempfindliche Element, von ersten reflektierten Bruchteilen (RF1) des ersten Impulses während eines ersten Zeitfensters (TW1); und
- Bestimmen einer Menge an Partikeln in dem Medium in Abhängigkeit von der Erfassung während des ersten Zeitfensters (TW1);
- wobei ein Weg mit einer Mindestlänge für einen Lichtstrahl, der durch die Emittereinheit (EU) abgestrahlt, von einem in der Messkammer (MC) auf einer Seite der Messkammer (MC) gegenüber der Sensorvorrichtung (SD) angeordneten Reflektor (R) reflektiert und durch das lichtempfindliche Element erfasst wird, durch die Abstrahlrichtung und durch eine wechselseitige Anordnung des Reflektors (R), der Emittereinheit (EU) und des lichtempfindlichen Elements definiert ist; und
- wobei eine Differenz zwischen einer Beginnzeit des ersten Impulses (P1) und einer Endzeit des ersten Zeitfensters (TW1) kleiner ist als eine Laufzeit von sich entlang des Wegs mit der Mindestlänge ausbreitendem Licht.

**2.** Verfahren nach Anspruch 1, wobei das Verfahren darüber hinaus umfasst:

- Erfassen während eines oder mehrerer weiterer Zeitfenster/s (TW2, TW3),

- von reflektierten Bruchteilen (RFS) eines zweiten Lichtimpulses (P2), der durch die Emittereinheit (EU) in die Messkammer (MC) abgestrahlt wird;
und/oder
- von weiteren reflektierten Bruchteilen (RF2, RF3) des ersten Impulses (P1); und

- Bestimmen mindestens eines Kompensationsfaktors in Abhängigkeit von der Erfassung während des einen oder der mehreren Zeitfenster/s (TW2, TW3), wobei die Menge an Partikeln darüber hinaus in Abhängigkeit von dem einen oder den mehreren Kompensationsfaktor/en bestimmt wird.

3. Verfahren nach Anspruch 2, wobei das Bestimmen des mindestens einen Kompensationsfaktors umfasst, mindestens einen Messwert in Abhängigkeit von der Erfassung während des einen oder der mehreren Zeitfenster/s (TW2, TW3) mit mindestens einem vorbestimmten Referenzwert zu vergleichen.

4. Verfahren nach einem der Ansprüche 2 oder 3, wobei

- das eine oder die mehreren weiteren Zeitfenster (TW2, TW3) ein zweites Zeitfenster (TW2) nach dem ersten Zeitfenster (TW1) umfasst bzw. umfassen;
- das Verfahren umfasst, während des zweiten Zeitfensters (TW2) zweite reflektierte Bruchteile (RF2) des ersten Impulses (P1) durch das lichtempfindliche Element zu erfassen; und
- der mindestens eine Kompensationsfaktor in Abhängigkeit von der Erfassung während des zweiten Zeitfensters (TW2) bestimmt wird.

5. Verfahren nach Anspruch 4, wobei die Laufzeit von sich entlang des Wegs mit der Mindestlänge ausbreitendem Licht

- länger ist als eine Differenz zwischen einer Endzeit des ersten Impulses (P1) und einer Beginnzeit eines zweiten Zeitfensters (TW2); und
- kürzer ist als eine Differenz zwischen der Beginnzeit des ersten Impulses (P1) und einer Endzeit des zweiten Zeitfensters (TW2).

6. Verfahren nach einem der Ansprüche 2 bis 5, wobei

- das eine oder die mehreren Zeitfenster (TW2, TW3) ein drittes Zeitfenster (TW3) vor dem ersten Zeitfenster (TW1) umfasst bzw. umfassen;
- das Verfahren umfasst, während des dritten Zeitfensters (TW3) dritte reflektierte Bruchteile des ersten Impulses (P1) durch das lichtempfindliche Element zu erfassen; und
- der mindestens eine Kompensationsfaktor in Abhängigkeit von der Erfassung während des dritten Zeitfensters (TW3) bestimmt wird.

7. Verfahren nach Anspruch 6, wobei eine Laufzeit von Licht, das sich entlang eines optischen Übersprechwegs zwischen der Emittereinheit (EU) und dem lichtempfindlichen Element ausbreitet,

- länger ist als eine Differenz zwischen einer Endzeit des ersten Impulses (P1) und einer Beginnzeit des dritten Zeitfensters (TW3); und
- kürzer ist als eine Differenz zwischen der Beginnzeit des ersten Impulses (P1) und einer Endzeit des dritten Zeitfensters (TW3).

8. Verfahren nach einem der Ansprüche 2 bis 7, wobei:

- das eine oder die mehreren Zeitfenster (TW2, TW3) ein viertes Zeitfenster umfasst bzw. umfassen;
- das Verfahren umfasst, während des vierten Zeitfensters die reflektierten Bruchteile des zweiten Impulses (P2) durch ein weiteres lichtempfindliches Element zu erfassen; und
- der mindestens eine Kompensationsfaktor in Abhängigkeit von der Erfassung während des vierten Zeitfensters bestimmt wird.

9. Verfahren nach Anspruch 8, wobei:

- ein weiterer Weg mit einer Mindestlänge für einen Lichtstrahl, der durch die Emittereinheit (EU) abgestrahlt, vom Reflektor (R) reflektiert und durch das weitere lichtempfindliche Element erfasst wird, durch eine spezifizierte weitere Abstrahlrichtung der Emittereinheit (EU) und durch eine wechselseitige Anordnung des Reflektors (R), der Emittereinheit (EU) und des weiteren lichtempfindlichen Elements definiert ist;
- eine Laufzeit von sich entlang des weiteren Wegs mit der Mindestlänge ausbreitendem Licht länger ist als eine Differenz zwischen einer Endzeit des zweiten Impulses (P2) und einer Beginnzeit des vierten Zeitfensters; und
- die Laufzeit von sich entlang des weiteren Wegs mit der Mindestlänge ausbreitendem Licht kürzer ist als eine Differenz zwischen der Beginnzeit des zweiten Impulses (P2) und einer Endzeit des vierten Zeitfensters.

10. Verfahren nach einem der Ansprüche 8 oder 9, wobei das Erfassen der reflektierten Bruchteile (RFS) des zweiten Impulses (P2) umfasst, eine Stärke von Licht abzufühlen, das das weitere lichtempfindliche Element während des vierten Zeitfensters erreicht.

11. Verfahren nach einem der Ansprüche 2 bis 10, darüber hinaus umfassend, einen Qualitätsindex in Abhängigkeit von dem mindestens einen Kompensationsfaktor zu bestimmen, wobei der Qualitätsindex für eine Verschmutzung der Emittereinheit, des lichtempfindlichen Elements und/oder der Messkammer (MC) steht.

12. Verfahren nach einem der Ansprüche 1 bis 10, wobei das Bestimmen der Menge an Partikeln umfasst, eine Anzahl von Lichtreflexionen zu zählen, die während des ersten Zeitfensters (TW1) am lichtempfindlichen Element einfallen.

13. Verfahren nach einem der Ansprüche 1 bis 12, wobei das lichtempfindliche Element eine oder mehrere Lawinenphotodiode/n und/oder eine oder mehrere Einzelphotonen-Lawinendiode/n umfasst.

14. Sensorsystem zum Erfassen von Partikeln in einem Medium, das in einer Messkammer (MC) des Systems vorhanden ist, wobei das System darüber hinaus umfasst:

- eine Sensorvorrichtung (SD), die im Inneren der Messkammer (MC) angeordnet ist, wobei die Sensorvorrichtung eine Emittereinheit (EU) und ein lichtempfindliches Element umfasst;
- wobei die Emittereinheit (EU) dazu ausgelegt ist, einen ersten Lichtimpuls (P1) in die Messkammer (MC) in einer spezifizierten Abstrahlrichtung der Emittereinheit (EU) abzustrahlen;
- einen Reflektor (R), der in der Messkammer (MC) auf einer Seite der Messkammer (MC) gegenüber der Sensorvorrichtung (SD) angeordnet ist,
- wobei das lichtempfindliche Element dazu ausgelegt ist, erste reflektierte Bruchteile (RF1) des ersten Impulses (P1) während eines ersten Zeitfensters (TW1) zu erfassen; und
- eine Verarbeitungseinheit (PU), die dazu ausgelegt ist, eine Menge an Partikeln in dem Medium in Abhängigkeit von der Erfassung während des ersten Zeitfensters (TW1) zu bestimmen; wobei
- ein Weg mit einer Mindestlänge für einen Lichtstrahl, der durch die Emittereinheit (EU) abgestrahlt, vom Reflektor (R)der Messkammer (MC) reflektiert und durch das lichtempfindliche Element erfasst wird, durch die Abstrahlrichtung und durch eine wechselseitige Anordnung des Reflektors (R), der Emittereinheit (EU) und des lichtempfindlichen Elements definiert ist; und
- wobei eine Differenz zwischen einer Beginnzeit des ersten Impulses (P1) und einer Endzeit des ersten Zeitfensters (TW1) kleiner ist als eine Laufzeit von sich entlang des Wegs mit der Mindestlänge ausbreitendem Licht ist.

15. System nach Anspruch 14, wobei das System eine integrierte Schaltung umfasst, die das lichtempfindliche Element und die Verarbeitungseinheit (PU) umfasst.

## Revendications

1. Procédé de détection de particules dans un milieu présent dans une chambre de mesure (MC), sachant qu'un dispositif de capteur (SD) est agencé à l'intérieur de la chambre de mesure (MC), et sachant que le dispositif de capteur comprend une unité émettrice (EU) et un élément photosensible, le procédé comprenant :

- l'émission par l'unité émettrice (EU) d'une première impulsion de lumière (P1) vers la chambre de mesure (MC) dans une direction d'émission spécifiée de l'unité émettrice (EU) ;
- la détection par l'élément photosensible de premières fractions réfléchies (RF1) de la première impulsion pendant une première fenêtre de temps (TW1) ; et
- la détermination d'une quantité de particules dans le milieu en fonction de la détection pendant la première fenêtre de temps (TW1) ;
- sachant qu'un trajet à longueur minimale pour un rayon lumineux émis par l'unité émettrice (EU), réfléchi depuis un réflecteur (R) agencé dans la chambre de mesure (MC) d'un côté de la chambre de mesure (MC) à l'opposé du dispositif de capteur (SD) et détecté par l'élément photosensible est défini par la direction d'émission et par un agencement mutuel du réflecteur (R), de l'unité émettrice (EU) et de l'élément photosensible ; et
- sachant qu'une différence entre un temps de début de la première impulsion (P1) et un temps de fin de la première fenêtre de temps (TW1) est plus petite qu'un temps de vol de la propagation de lumière le long du trajet à longueur minimale.

2. Procédé selon la revendication 1, sachant que le procédé comprend en outre :

   - la détection, pendant une ou plusieurs fenêtres de temps supplémentaires (TW2, TW3),

     - de fractions réfléchies (RFS) d'une deuxième impulsion de lumière (P2) émise par l'unité émettrice (EU) vers la chambre de mesure (MC) ; et/ou
     - de fractions réfléchies supplémentaires (RF2, RF3) de la première impulsion (P1) ; et

   - la détermination d'au moins un facteur de compensation en fonction de la détection pendant l'une ou les plusieurs fenêtres de temps supplémentaires (TW2, TW3), sachant que la quantité de particules est en outre déterminée en fonction de l'un ou des plusieurs facteurs de compensation.

3. Procédé selon la revendication 2, sachant que la détermination de l'au moins un facteur de compensation comprend la comparaison d'au moins une valeur de mesure en fonction de la détection pendant l'une ou les plusieurs fenêtres de temps supplémentaires (TW2, TW3) à au moins une valeur de référence prédéterminée.

4. Procédé selon l'une des revendications 2 ou 3, sachant que

   - l'une ou les plusieurs fenêtres de temps supplémentaires (TW2, TW3) comprennent une deuxième fenêtre de temps (TW2) après la première fenêtre de temps (TW1) ;
   - le procédé comprend la détection, pendant la deuxième fenêtre de temps (TW2), de deuxièmes fractions réfléchies (RF2) de la première impulsion (P1) par l'élément photosensible ; et
   - l'au moins un facteur de compensation est déterminé en fonction de la détection pendant la deuxième fenêtre de temps (TW2).

5. Procédé selon la revendication 4, sachant que le temps de vol de la propagation de lumière le long du trajet à longueur minimale

   - est plus grand qu'une différence entre un temps de fin de la première impulsion (P1) et un temps de début de la deuxième fenêtre de temps (TW2) ; et
   - est plus petit qu'une différence entre le temps de début de la première impulsion (P1) et un temps de fin de la deuxième fenêtre de temps (TW2).

6. Procédé selon l'une des revendications 2 à 5, sachant que

   - l'une ou les plusieurs fenêtres de temps supplémentaires (TW2, TW3) comprennent une troisième fenêtre de temps (TW3) avant la première fenêtre de temps (TW1) ;
   - le procédé comprend la détection, pendant la troisième fenêtre de temps (TW3), de troisièmes fractions réfléchies de la première impulsion (P1) par l'élément photosensible ; et
   - l'au moins un facteur de compensation est déterminé en fonction de la détection pendant la troisième fenêtre de temps (TW3).

7. Procédé selon la revendication 6, sachant qu'un temps de vol de la propagation de lumière le long d'un trajet diaphonique optique entre l'unité émettrice (EU) et l'élément photosensible

   - est plus grand qu'une différence entre un temps de fin de la première impulsion (P1) et un temps de début de la troisième fenêtre de temps (TW3) ; et
   - est plus petit qu'une différence entre le temps de début de la première impulsion (P1) et un temps de fin de la troisième fenêtre de temps (TW3).

8. Procédé selon l'une des revendications 2 à 7, sachant que

   - l'une ou les plusieurs fenêtres de temps supplémentaires (TW2, TW3) comprennent une quatrième fenêtre de temps ;
   - le procédé comprend la détection, pendant la quatrième fenêtre de temps, des fractions réfléchies de la deuxième impulsion (P2) par un élément photosensible supplémentaire ; et
   - l'au moins un facteur de compensation est déterminé en fonction de la détection pendant la quatrième fenêtre de temps.

9. Procédé selon la revendication 8, sachant que

   - un trajet supplémentaire à longueur minimale pour un rayon lumineux émis par l'unité émettrice (EU), réfléchi depuis le réflecteur (R) et détecté par l'élément photosensible supplémentaire est défini par une direction d'émission supplémentaire spécifiée de l'unité émettrice (EU) et par un agencement mutuel du réflecteur (R), de l'unité émettrice (EU) et de l'élément photosensible supplémentaire ; et
   - un temps de vol de la propagation de lumière le long du trajet supplémentaire à longueur minimale est plus grand qu'une différence entre un temps de fin de la deuxième impulsion (P2) et un temps de début de la quatrième fenêtre de temps ; et
   - le temps de vol de la propagation de lumière le long du trajet supplémentaire à longueur minimale est plus petit qu'une différence entre le temps de début de la deuxième impulsion (P2) et un temps de fin de la quatrième fenêtre de temps.

10. Procédé selon l'une des revendications 8 ou 9, sachant que la détection des fractions réfléchies (RFS) de la deuxième impulsion (P2) inclut la détection d'une intensité de lumière atteignant l'élément photosensible supplémentaire pendant la quatrième fenêtre de temps.

11. Procédé selon l'une des revendications 2 à 10, comprenant en outre la détermination d'un indice de qualité en fonction de l'au moins un facteur de compensation, l'indice de qualité étant indicateur d'un encrassement de l'unité émettrice, de l'élément photosensible et/ou de la chambre de mesure (MC).

12. Procédé selon l'une des revendications 1 à 10, sachant que la détermination de la quantité de particules inclut le comptage d'un nombre de réflexions de lumière frappant l'élément photosensible pendant la première fenêtre de temps (TW1).

13. Procédé selon l'une des revendications 1 à 12, sachant que l'élément photosensible comprend une ou plusieurs photodiodes à avalanche et/ou une ou plusieurs diodes à avalanche à photon unique.

14. Système de capteur pour la détection de particules dans un milieu présent dans une chambre de mesure (MC) du système, le système comprenant en outre :

   - un dispositif de capteur (SD) agencé à l'intérieur de la chambre de mesure (MC), sachant que le dispositif de capteur comprend une unité émettrice (EU) et un élément photosensible ;
   - l'unité émettrice (EU) étant configurée pour émettre une première impulsion (P1) de lumière vers la chambre de mesure (MC) dans une direction d'émission spécifiée de l'unité émettrice (EU) ;
   - un réflecteur (R) agencé dans la chambre de mesure (MC) d'un côté de la chambre de mesure (MC) à l'opposé du dispositif de capteur (SD) ;
   - l'élément photosensible étant configuré pour détecter des premières fractions réfléchies (RF1) de la première impulsion (P1) pendant une première fenêtre de temps (TW1) ; et
   - une unité de traitement (PU) configurée pour déterminer une quantité de particules dans le milieu en fonction de la détection pendant la première fenêtre de temps (TW1) ; sachant que
   - un trajet à longueur minimale pour un rayon lumineux émis par l'unité émettrice (EU), réfléchi depuis le réflecteur (R) de la chambre de mesure (MC) et détecté par l'élément photosensible est défini par la direction d'émission et par un agencement mutuel du réflecteur (R), de l'unité émettrice (EU) et de l'élément photosensible ; et
   - une différence entre un temps de début de la première impulsion (P1) et un temps de fin de la première fenêtre de temps (TW1) est plus petite qu'un temps de vol de la propagation de lumière le long du trajet à longueur minimale.

15. Système de la revendication 14, le système comprenant un circuit intégré comprenant l'élément photosensible et l'unité de traitement (PU).

## FIG. 1A

## FIG. 1B

## FIG. 2

## FIG. 3

FIG. 4

FIG. 5

**EP 3 225 977 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150371514 A1
- US 20150241330 A1